# EUROPEAN PATENT SPECIFICATION

(11) **EP 1 458 167 B1**
(45) Date of publication and mention of the grant of the patent: **12.04.2006**
(21) Application number: 04251362.2
(22) Date of filing: 10.03.2004
(51) Int. Cl.: H04L 29/12

(54) **Method of network address setting**
Verfahren zum Einrichten von Netzwerkadressen
Procédé pour établir des adresses de réseau

(30) Priority: 12.03.2003 JP 2003066570
(43) Date of publication of application: 15.09.2004
(73) Proprietor: FANUC LTD, Minamitsuru-gun, Yamanashi 401-0597 (JP)
(72) Inventor: Tanaka, Kunio, Akishima-shi, Tokyo 196-0034 (JP); Mutai, Norinaga, Room7-306 FANUC Manshonharimomi, Minamitsuru-gun. Yamanashi 401-0511 (JP)
(74) Representative: Billington, Lawrence Emlyn

(56) References cited:
- WO-A-00/76174
- US-A1- 2001 005 366
- R. DROMS: "Dynamic Host Configuration Protocol" IETF RFC 2131, March 1997 (1997-03), pages 1-45, XP015007915
- IRIE K ET AL: "A NEW DYNAMIC DNS FOR REGIONAL PC COMMUNICATION NETWORK SYSTEM" PROCEEDINGS OF THE EUROPEAN CONFERENCE ON NETWORKS AND OPTICAL COMMUNICATIONS 1999. NOC'99. CORE NETWORKS AND NETWORK MANAGEMENT, AMSTERDAM: IOS PRESS, NL, vol. PART 2, 1999, pages 330-337, XP000829450 ISBN: 90-5199-497-4

## Description

This invention relates to a method of network address setting in a system obtained by connecting a plurality of control devices over a network to an information processing device adapted to manage these control devices.

The most basic network address setting method applicable to a case where connection between a plurality of control devices and an information processing device adapted to manage these control devices is established over a network is to perform network address assignment by a manual operation with a display and an input/output unit such as a keyboard that are connected for each control device, or alternatively, to perform the above network address assignment with a rotary switch or the like prepared in place of a general-purpose input/output unit.

Specifically, when Ethernet (a registered trademark) is applied to the above connection, automatic assignment of an IP address specified as a network address of the Ethernet also takes place using a DHCP (Dynamic Host Configuration Protocol) available as one of Ethernet functions.

In addition, a technology is well known in which a plurality of combinations of IP address of client device and computer name are stored in advance in the form of a table in a server device, and the server device sends an unused one of the stored combinations of IP address and computer name to a client device when receiving an assignment information request by the client device at a startup time of the client device so that assignment is carried out (See Japanese Patent Application Laid-open No. 2002-300166).

In addition, another technology is also well known in which when an ARP (Address Resolution Protocol) request packet with a simultaneous broadcast address assigned is transmitted from a host device to terminals, each terminal sends a physical address and an IP address to the host device, and the host device sends the IP address to the terminal when the physical address and the IP address of each terminal are already on record, but the host device registers an unused IP address in association with the physical address when they are not on record, so that the IP address is assigned and sent to the terminal (See Japanese Patent Application Laid-open No. 8-237285).

In addition, a still another technology is also well known in which an ARP request packet is transmitted from a server to client devices after recording the same IP address to the client devices, and the client device transmits time data of receipt of the packet to the server. (See Japanese Patent Application Laid-open No. 11-74915).

Network address assignment with the input/output unit connected for each control device requires hardware of the display and the general-purpose input/output unit such as the keyboard, leading to an increase in cost for the control devices applicable to numerical control devices, robot control devices and PLCs (Programmable Logic Controller). In addition, setup of the general-purpose input/output unit is liable to take much time. Network address assignment with the rotary switch also requires as many as switches enough to attain the network address setting. For the IP address of the Ethernet, for instance, eight pieces of switches are required. A method of fixing high-order bits of an IP address in a condition where setting of several bits of low-order bits thereof is performed with the rotary switch or the like provides a semi-fixed IP address, so that application of the above method is limited to a closed network having limitations on the number of devices connected thereto.

Application of the Ethernet to the above connection is effective in allowing the DHCP server to perform automatic assignment of the IP address using the DHCP functions, while it is difficult to allow the above server to assign a specific IP address to each control device. A DHCP/DNS (Domain Name System) server obtained by linkage of the DHCP with a DNS server may perform assignment of the specific IP address to each specific control device name, while it is necessary to assign control device names to the control devices in advance. In addition, a special knowledge about networks is also required to work the DHCP/DNS server.

Further prior art disclosures are to be found in US 2001/005366 A1 and WO 00/76174A, the former providing a method of network address setting according to the preambles of attached claims 1 and 2.

The present invention relates to a method of network address setting by assigning network addresses to a plurality of control devices, such as numerical control devices, robot control devices and PLCs, respectively in a system obtained by connecting the plurality of control devices over a network to an information processing device adapted to manage the plurality of control devices.

A method of network address setting according to the present invention comprises: assigning a device ID to each control device with a device ID setting means installed in the each control device to transmit a network address request, together with the assigned device ID, from the each-control device to the information processing device; and causing the information processing device to inform each control device of network address with reference to a correspondence table between device IDs and network addresses, together with the device ID received from the each control device.

According to a first aspect of the present invention, when the number of the device IDs which can be assigned to the control devices are limited, the information processing device is provided with a plurality of the correspondence tables in an ordered form, and the method of network address setting comprises: a first step of transmitting network address requests for the number of control devices which can be assigned device IDs at a time, among the control devices connected to the network, together with the respective device IDs; a second step in which the information processing device informs the control devices of network address according to a first correspondence table, in response to the network address requests in the first step; a third step of transmitting network address requests for the number of control devices which can be assigned device IDs at a time, among the remaining control devices, together with the respective device IDs; and a fourth step in which the information processing device informs the control devices of the network address according to a second correspondence table in response to the network address requests in the third step; and, if necessary, repetition of the above third and fourth steps to be executed until the network address is completely informed to all the control devices to which network addresses have to be assigned.

Alternatively, according to a second aspect of the present invention, when the number of the device IDs which can be assigned to the control devices are limited, the same device ID is assigned to a plurality of control devices, and the information processing device is provided with a plurality of the correspondence tables in an ordered form for the same device ID, whereby, upon receiving network address requests with the same device IDs, the information processing device informs the control devices being on record in the correspondence tables of network addresses, in the order of the correspondence tables, according to the order of receipt of the network address requests.

Transmission of the network address request from each control device to the information processing device may take place with a manual operation for the each control device via an operator. The operation via the operator may be an operation of a button installed on each control device.

Alternatively, transmission of the network address request from each control device to the information processing device may take place automatically when the power is applied to the each control device.

One of the control devices on the network may be used in place of the information processing device by providing the control device with the correspondence tables.

According to embodiments of the present invention, there is provided a method of assigning network addresses to the control devices easily without preparing any assigning input/output unit for the control devices or alternatively, with the minimum amount of hardware.

The foregoing and other features of the invention will be more apparent from the following description of preferred embodiments of the invention with reference to the accompanying drawings, in which:
Fig. 1 is a block diagram showing a system configuration of each embodiment according to the present invention;
Fig. 2 is a block diagram showing part of a numerical control device available as a control device in each embodiment according to the present invention;
Fig. 3 is a block diagram showing part of an information processing device;
Fig. 4 is a flow chart showing an operation process of a first embodiment;
Fig. 5 illustrates an operation in the first embodiment;
Fig. 6 illustrates a correspondence table for assignment of network addresses to control devices in the first embodiment;
Fig. 7 is a flow chart showing an operation process of a second embodiment;
Fig. 8 illustrates an operation in the second embodiment;
Fig. 9 illustrates a correspondence table between device IDs and network addresses in the second embodiment;
Fig. 10 illustrates an operation in a third embodiment, which is according to the present invention; and
Fig. 11 illustrates a table showing device IDs and corresponding network addresses in the third embodiment.

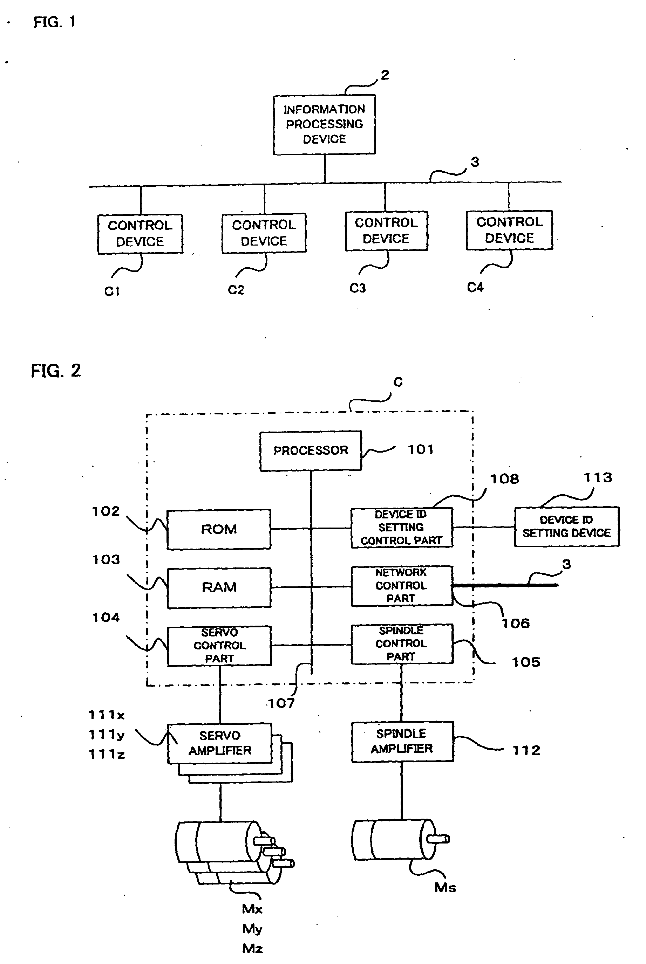

Fig. 1 is a block diagram showing a system configuration of one embodiment according to the present invention. In the above system configuration, a plurality of control devices C1, C2, C3, C4, ... such as numerical control devices, robot control devices and PLCs are interconnected over a network 3. In addition, an information processing device 2 adapted to manage these control devices C1, C2, C3, C4, ... is also connected to the network 3.

Fig. 2 is a block diagram showing an outline of a machine tool controlling numerical control device C (C1, C2, C3, C4, ...) as one of the control devices C1, C2, C3, C4, ..., specifically, part of the numerical control device C and that of a machine tool controlled with the above numerical control device C.

The numerical control device C has a processor 101 and components such as a ROM 102, a RAM 103, a servo control part 104, a spindle control part 105 and a network control part 106, which are all connected to the processor 101 through a bus 107. The processor 101 reads out a system program stored in the ROM 102 therefrom and controls the numerical control device C wholly according to the read system program. Temporary computational data is stored in the RAM 103. The servo control part 104 is composed of a processor and memories such as a ROM and a RAM and the like. The above servo control part 104 is adapted to drive axial servo motors Mx, My and Mz through axial servo amplifiers 111x, 111y and 111z in response to an instruction for movement to each feed axis (specifically, feed axes in the first embodiment are assumed to be those for orthogonal X, Y and Z axes) by the main processor 101 of the numerical control device C with reference to a machining program.

The above numerical control device C and the above machine tool are not different in basic configuration and operation from a conventional numerical control device and a conventional machine tool, except that the above numerical control device C does not have a display control part, a display and a keyboard that are all required for network address assignment. Instead, there are the following two cases applicable to the above numerical control device C in relation to the present invention, one case where the numerical control device C has a device ID setting control part 108 and a device ID setting device 113 such as a rotary switch, a button or like, hardware allowing easy input of a device ID, and the other case where neither the device ID setting control part 108 nor the device ID setting device 113 is required. In Fig. 2, there is shown the case where the numerical control device C has the device ID setting control part 108 and the device ID setting device 113. Further, the system program in relation to the present invention comprises a step of assigning a device ID, a step of transmitting a network address request to the information processing device 2 and a step of receiving network address information from the information processing device 2.

It is noted that a robot control device, a PLC or the like is equivalent to the numerical control device C. Thus, the present invention also involves network address assignment attained by adding the device ID setting control part 108 and the device ID setting device 113 to each conventional robot control device or each conventional PLC.

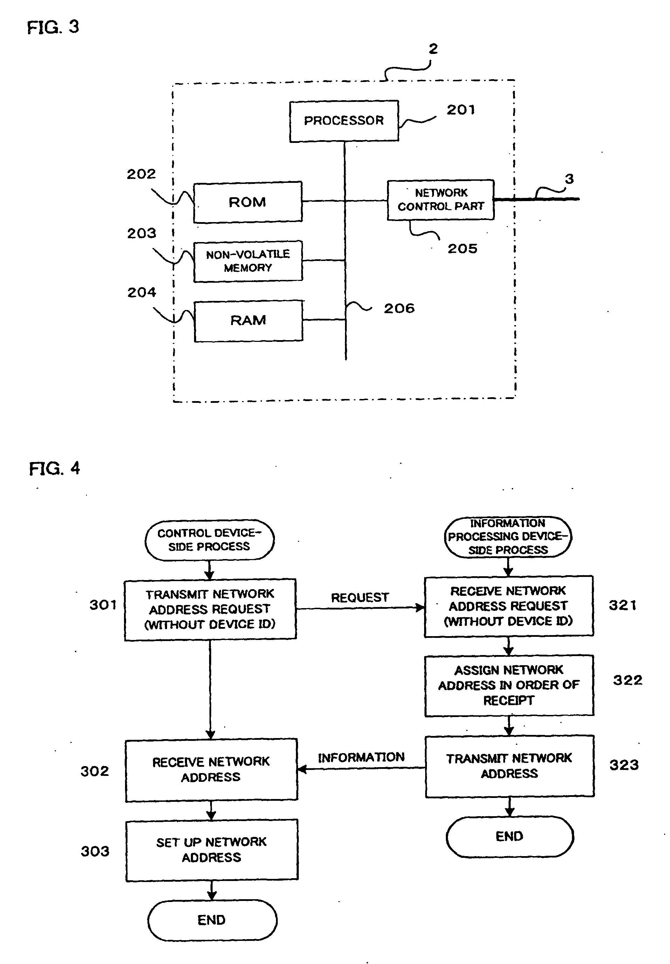

Fig. 3 is a block diagram showing part of the information processing device 2 of one embodiment. The information processing device 2 has a processor 201 and components such as a ROM 202, a non-volatile memory 203 configured with an EEPROM, a RAM 204 and a network control part 205, which are all connected to the processor 201 through a bus 206. The processor 201 reads out a system program stored in the ROM 202 therefrom, so that the information processing device 2 works according to the read system program. The RAM 204 is used as a working memory applied to the above operation of the processor. In addition, the non-volatile memory 203 has a correspondence table, in which correspondences between the control devices C1, C2, C3, C4, ... and the network addresses are stored. The system program stored in the ROM 202 comprises a step of receiving a network address request from each of the above control devices C1, C2, C3, C4, ..., and a step of giving network address information to the relevant control device Cj with reference to the correspondence table between control devices (C1, C2, C3, C4, ...) and network addresses (as will be described later), in response to the above network address request.

It is noted that the information processing device 2 may be a typically available personal computer or the like having network functions. In this case, a hard disk storage device is generally specified as the ROM 202 and the non-volatile memory 203. Alternatively, one control device Cj, selected from among the control devices C1, C2, C3, C4, ... , may play the role of an information processing device 2 by allowing the system program of the control device Cj to execute the above steps.

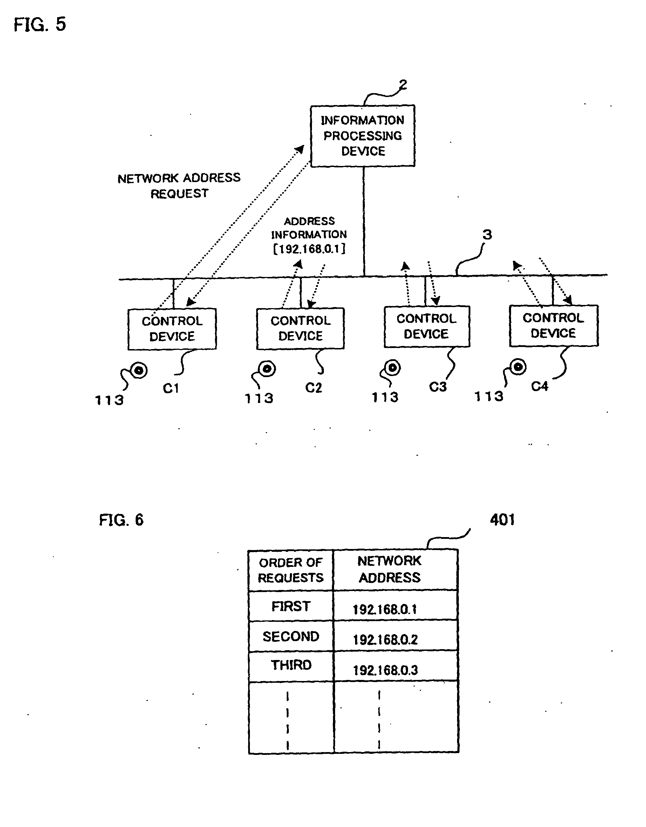

Fig. 4 is a flow chart showing a method of network address setting in a first embodiment. Fig. 5 illustrates an operation in the first embodiment. Fig. 6 illustrates a correspondence table 401 that is provided in the non-volatile memory 203 of the information processing device 2 in the first embodiment and in which the correspondences between the control devices C1, C2, C3, C4, .... and the network addresses are stored. Although the first embodiment is not in accordance with the present invention, it is included herein for explanations purposes.

In the first embodiment, each of the control devices (specifically, the numerical control devices) C1, C2, C3, C4, ... has a network address request instructing button as the device ID setting device 113, having not an ID setting control part 108. Alternatively, it is not necessary for each control device to have such a button, if each control device is adapted to output a network address request signal automatically when the power is applied to the control devices C1, C2, C3, C4, ....

In the correspondence table 401, the network addresses are set up and stored in order so as to correspond to the order of network address requests.

The system program of each control device C1, C2, C3, C4, ... transmits a network address request through the network control part 106 to the network 3 in a simultaneous broadcast manner by an operation of the button or the like via the operator or automatically when the power is applied (Step 301). Transmission in the simultaneous broadcast manner causes data to be transmitted to all the devices connected to the network 3, so that the control devices C1, C2, C3, C4, ... need not get a network address of the information processing device 2 for transmitting the network address requests to the information processing device 2.

The system program of the information processing device 2 reads the network address request received through the network control part 205 over the network (Step 321). Then, the system program determines the network address with reference to the correspondence table 401 between network address request orders and network addresses (Step 322). Specifically, the information processing device 2 reads out the network address from the correspondence table 401 and sets up the read network address on the control device Cj that has issued the network address request, in the order of receipt of the network address requests. Subsequently, the system program transmits network address information through the network control part 205 to the network 3 (Step 323). As the information processing device 2 transmits the network address in response to the earlier received network address request, the network address information is can be transmitted although network addresses are not assigned to the control devices C1, C2, C3, C4, ... at this point of time.

The system program of each control device C1, C2, C3, C4, ... reads the network address information received through the network control part 106 over the network 3 (Step 302). Subsequently, the system program sets up the received network address on the network control part 106 (Step 303), thereafter, the network control part 106 can deal with data corresponding to the network address set up thereon, as data addressed to one's own device.

As described above, as network addresses are assigned to the control devices C1, C2, C3, C4, ... in the order of transmission of network address requests, an operator can understand the network addresses assigned to the control devices C1, C2, C3, C4, ..., regardless of automatic assignment of the network addresses. Consequently, the system and the operator can share the same understanding .

In Fig. 5, there is shown a case where the control device C1 outputs a first network address request, the information processing device 2 determines a network address "192.168.0.1" corresponding to the first receipt of the network address request with reference to the correspondence table 401 and then transmits the determined network address to the control device C1, with the result that the network address "192.168.0.1" is assigned to the control device C1.

A plurality of control devices execute processing at steps 301, 302 and 303 so that non-duplicate network addresses can be assigned to all the control devices.

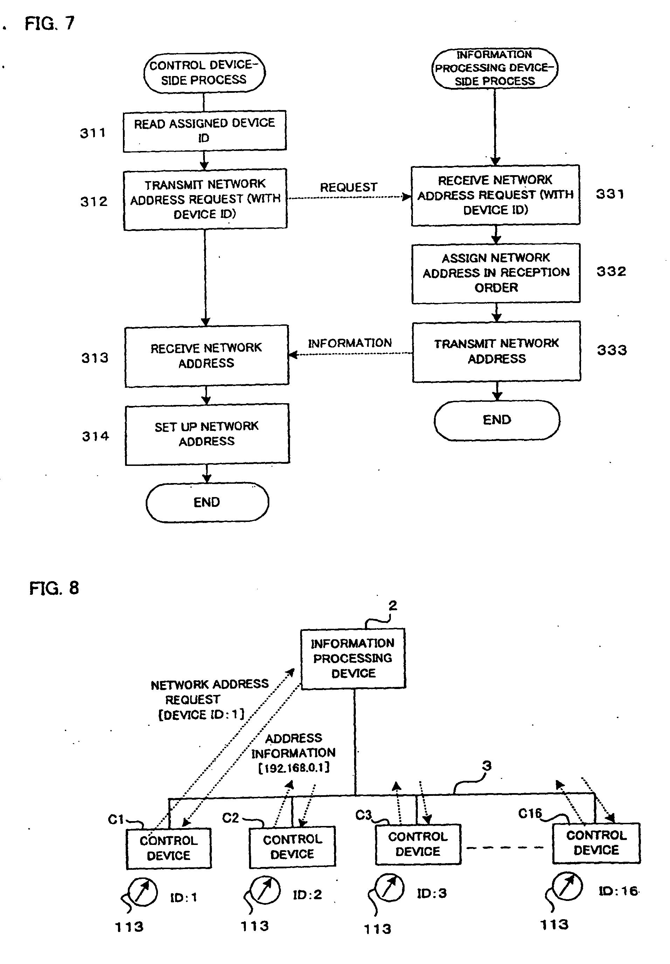

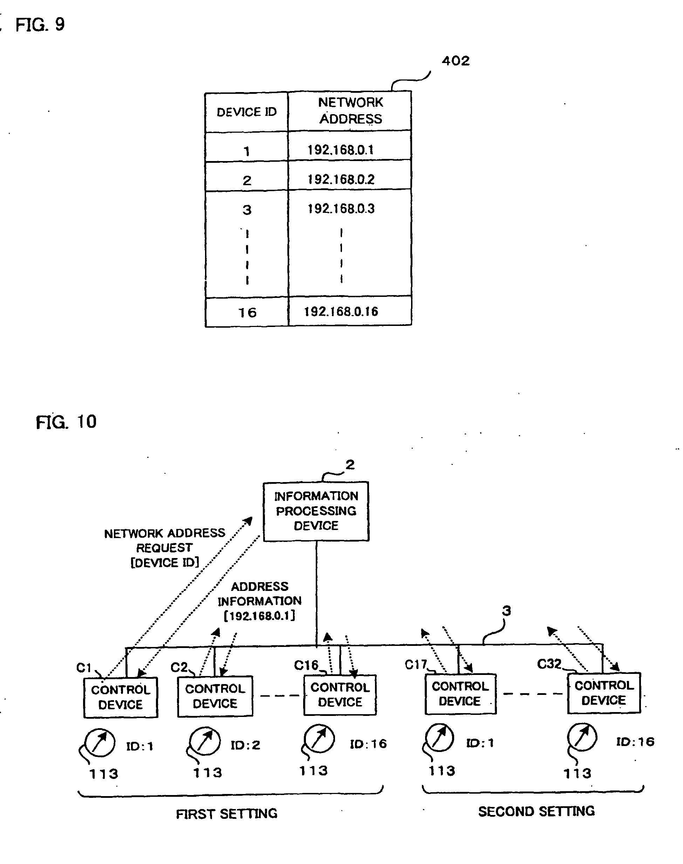

Fig. 7 is a flow chart showing the method of network address setting in a second embodiment. Fig. 8 illustrates an operation in the second embodiment. Fig. 9 illustrates a correspondence table 402 that is provided in the non-volatile memory 203 of the information processing device 2 in the second embodiment and in which correspondences between the control devices C1, C2, C3, C4, ... and the network addresses are stored. As shown in Fig. 9, in the correspondence table 402 in the second embodiment, the network addresses are set up and stored in correspondence to the device IDs. Similarly as for the first embodiment, the second embodiment is not in accordance with the present invention, and is included herein for explanatory purposes.

In the second embodiment, each of the control devices C1, C2, C3, C4, ... has the device ID setting device 113 such as the rotary switch, as shown in Fig. 8. When a network address request instruction is inputted to the control device Cj after an ID is set in the device ID setting device 113, the system program reads the device ID in the device ID setting device 113 with the device ID setting control part 108 (Step 311), and then network address request with the device ID attached is transmitted through the network control part 106 to the network 3 in the simultaneous broadcast manner (Step 312).

When the system program of the information processing device 2 reads the network address request received through the network control part 205 over the network 3 (Step 331), it determines the network address set up and stored for the control device Cj having the received device ID, with reference to correspondence table 402 between device IDs and network addresses (See Fig. 9) (Step 332). Subsequently, network address information is transmitted through the network control part 205 to the network 3 in response to the network address request (Step 333).

The system program of each control device C1, C2, C3, C4, ... then reads the network address information received through the network control part 106 over the network 3 (Step 313), and sets up the received network address in the network control part 106. Thereafter, the network control part 106 can deal with data corresponding to the network address set up thereon, as data addressed to one's own device. As a plurality of control devices C1, C2, C3, C4, ... execute processing at steps 311, 312, 313 and 314, non-duplicate network addresses can be assigned to all the control devices C1, C2, C3, C4, .... . Specifically, network address requests may be transmitted to the information processing device 2 every time device IDs are assigned to the control devices C1, C2, C3, C4, ... , or after device IDs are assigned to all the control devices C1, C2, C3, C4, ... .

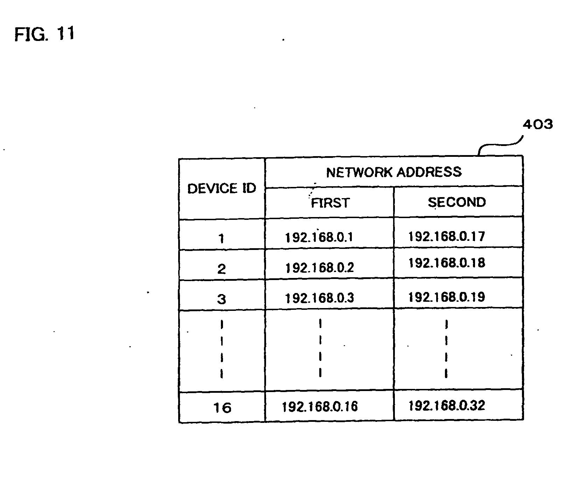

Figs. 10 and 11 illustrate a third embodiment, which is according to the present invention. In a case of the third embodiment, the number of IDs which can be set by means of the device ID setting device 113 composed of a rotary switch or the like is limited and the number of the control devices C1, C2, C3, C4, ... connected to the network is larger than that of the IDs which can be assigned with the device ID setting device 113. Specifically, in a case of the third embodiment, 16 device IDs can be assigned with the device ID setting device 113 and 32 control devices C1, C2, C3, C4, ... C32 are connected over the network 3.

In the correspondence table 403 between device IDs and network addresses (See Fig. 11), first and second network addresses are assigned and stored for the device IDs "1" to "16".

In case of the third embodiment, network address requests can be carried out and processed every number of control devices which can be assigned device IDs by means of the device ID setting device 113. Specifically, non-duplicate network addresses can be assigned to all the control devices with a first step of transmitting network address requests for the number of control devices which can be assigned device IDs at a time, among the control devices connected to the network, together with the respective device IDs; a second step in which the information processing device informs the control devices of network address according to the first correspondence table, in response to the network address requests in the first step; a third step of transmitting network address requests for the number of control devices which can be assigned device IDs at a time, among the remaining control devices, together with the respective device IDs; and a fourth step in which the information processing device informs the control devices of the network address according to the second correspondence table in response to the network address requests in the third step; and repetition of the above third and fourth steps to be executed until the network address is completely informed to all the control devices to which network addresses have to be assigned.

The information processing device 2 first receives network address requests as many as the device IDs set up and stored in the correspondence table 403, and transmits the network addresses for the received IDs to the control devices C1 to C16. Then, the information processing device 2 judges the network address requests to be received next is second one, and then transmits the network address set up as the second one corresponding to the received device IDs. After network address requests as many as the device IDs set up as the second one are received and the network address are transmitted to the control devices, a processing is carried out as the third one.

As described above, the relation between the control devices C1, C2, C3, C4, ... C32 and the set-up network addresses becomes clear to an operator by performing network address requests in units of control devices which can be set by means of the device ID setting device such as the rotary switch.

Network addresses can be set to the control devices, even if network address requests are not outputted in groups for each unit of the number which can be assigned by means of the device ID setting device 113 as described above (specifically, for each unit of number of device IDs set up in the correspondence table 403). In this case, a counter or the like is provided to the information processing device 2 for each device ID. The value of the counter is incremented after transmission of a network address in response to the network address request of the corresponding ID. With the value of the counter, the discriminated address can be assigned and transmitted to the control device having the same device IDs. Accordingly, even if the network address requests successively are outputted from the two control devices with the device ID "1" assigned (specifically, the control devices C1 and C17 in the embodiment shown in Fig. 10), respectively, for instance, the first network address ("192,168.0.1" in the embodiment shown in Fig. 10) is assigned to the control device that has earlier transmitted the network address request, while the second network address ("192.168.0.17" in the embodiment shown in Fig. 10) is assigned to the control device that has outputted the next network address request.

In this case, however, among the control devices with the same device ID assigned by means of the device ID setting device 113, if the order of network addresses requests differs, then the network address request to be assigned differs. Thus, it is necessary to clearly establish the order of network address requests in advance by some means so as to inform an operator of the correct network addresses assigned to the control devices.

In the above embodiments, the information processing device 2 adapted to control the control devices C1, C2, C3, C4, ... is provided, in addition to the control devices. Alternatively, one control device Cj, selected from among the control devices C1, C2, C3, C4, ... , may be used in place of the information processing device 2 in such a manner as to allow the above one control device to execute similar functions to those of the information processing device 2.

The present invention is effective in assigning the specific network addresses to the plurality of networked control devices with a simple operation in case of network setting for the control devices such as NCs, robots and PLCs without requiring redundant hardware such as a display and a keyboard. It is possible to assign the specific network addresses to the control devices in conformity with the network to be connected, so that connection to the existing network is easily established.

## Claims

1. A method of network address setting by assigning network addresses to a plurality of control devices (C1...C32) respectively in a system obtained by connecting said plurality of control devices (C1...C32) over a network (3) to an information processing device (2) adapted to manage said plurality of control devices (C1...C32), comprising:
assigning a device ID to each control device (C1...C32) by a device ID setting means (113) installed in said each control device (C1...C32) and transmitting a network address request, together with said assigned device ID, from said each control device (C1...C32) to said information processing device (2); and
causing said information processing device (2) to inform each control device (C1...C32) of a network address with reference to a correspondence table (403) between device IDs and network addresses, together with the device ID received from said each control device (C1...C32);
**characterised in that**:
the number of the device IDs which can be assigned to the control devices (C1...C32) are limited and said information processing device (2) is provided with a plurality of said correspondence tables (403) in an ordered form, the method comprising:
a first step of transmitting network address requests for said limited number of control devices (C1...C16) which can be assigned device IDs at a time, from the control devices (C1...C32) connected to the network (3), together with their respective device IDs;
a second step in which the information processing device (2) informs said limited number of control devices (C1...C16) of their network addresses according to a first correspondence table (403), in response to the network address requests in the first step;
a third step of transmitting network address requests for a further said limited number of control devices (C17...C32) which can be assigned device IDs at a time, from the remaining control devices (C17...C32), together with their respective device IDs; and
a fourth step in which the information processing device (2) informs said further limited number of control devices (C17...C32) of the third step, of their network addresses according to a second correspondence table (403) in response to the network address requests in the third step; and
if necessary, repetition of the above third and fourth steps being executed until network addresses are completely informed to all the control devices to which network addresses have to be assigned.

2. A method of network address setting by assigning network addresses to a plurality of control devices (C1...C32) respectively in a system obtained by connecting said plurality of control devices (C1...C32) over a network (3) to an information processing device (2) adapted to manage said plurality of control devices (C1...C32), comprising:
assigning a device ID to each control device (C1...C32) by a device ID setting means (113) installed in said each control device (C1...C32) and transmitting a network address request, together with said assigned device ID, from said each control device (C1...C32) to said information processing device (2); and
causing said information processing device (2) to inform each control device (C1...C32) of a network address with reference to a correspondence table (403) between device IDs and network addresses, together with the device ID received from said each control device (C1...C32);
**characterised in that**:
the number of the device IDs which can be assigned to the control devices (C1...C32) are limited, the same device ID is assigned to a plurality of control devices, and said information processing device (2) is provided with a plurality of said correspondence tables (403) in an ordered form for the same device IDs, whereby, upon receiving network address requests with the same device IDs, said information processing device (2) informs said control devices being on record in said correspondence tables (403) of their network addresses, in order of said correspondence tables (403) according to the order of receipt of said network address requests.

3. The method of network address setting according to claim 1 or 2, wherein transmission of said network address request from each control device (C1...C32) to said information processing device (2) is carried out by manual operation of an operator for said each control device.

4. The method of network address setting according to claim 3, wherein said operation via the operator is an operation of a button installed on each control device (C1...C32).

5. The method of network address setting according to claim 1 or 2, wherein transmission of said network address request from each control device (C1...C32) to said information processing device (2) takes place automatically when the power is applied to said each control device.

6. The method of network address setting according to any preceding claim, wherein one of the control devices on the network (3) is used in place of said information processing device (2) by providing the control device with said correspondence tables (403).

7. The method of network address setting according to any preceding claim, wherein said control devices are any of numerical control devices, robot control devices and PLCs.

## Patentansprüche

1. Verfahren zum Einstellen von Netzwerkadressen durch Zuweisen von Netzwerkadressen an eine Mehrzahl Steuervorrichtungen (C1...C32) jeweils in einem System, das erhalten wird durch Verbinden der Mehrzahl Steuervorrichtungen (C1...C32) über ein Netzwerk (3) mit einer Informationsverarbeitungsvorrichtung (2), die für die Verwaltung der Mehrzahl Steuervorrichtungen (C1...C32) ausgelegt ist, umfassend:
Zuweisen einer Vorrichtungs-ID an jede Steuervorrichtung (C1...C32) mit einer Vorrichtungs-ID-Einstellvorrichtung (113), die in jeder Steuervorrichtung (C1...C32) installiert ist, und Übertragen einer Netzwerkadressenanfrage zusammen mit der zugewiesenen Vorrichtungs-ID von der Steuervorrichtung (C1...C32) an die Informationsverarbeitungsvorrichtung (2); und
Informieren-lassen jeder Steuervorrichtung (C1...C32) durch die Informationsverarbeitungsvorrichtung (2) über eine Netzwerkadresse bezogen auf eine Entsprechungstabelle (403) zwischen Vorrichtungs-IDs und Netzwerkadressen zusammen mit der von jeder Steuervorrichtung (C1...C32) erhaltenen Vorrichtungs-ID;
**dadurch gekennzeichnet, dass**:
die Anzahl Vorrichtungs-IDs, die den Steuervorrichtungen (C1...C32) zugewiesen werden kann, beschränkt ist und die Informationsverarbeitungsvorrichtung (2) mit einer Mehrzahl Entsprechungstabellen (403) in geordneter Form ausgestattet ist, wobei das Verfahren umfasst:
einen ersten Schritt der Übermittlung von Netzwerkadressenanfragen für die beschränkte Anzahl Steuervorrichtungen (C1...C16), denen nacheinander Vorrichtungs-IDs zugewiesen werden können, von den Steuervorrichtungen (C1...C32), die mit dem Netzwerk (3) verbunden sind, zusammen mit ihren jeweiligen Vorrichtungs-IDs;
einen zweiten Schritt, bei dem als Antwort auf die Netzwerkadressenanfrage im ersten Schritt die Informationsverarbeitungsvorrichtung (2) die beschränkte Anzahl Steuervorrichtungen (C1...C16) anhand einer ersten Entsprechungstabelle (403) über ihre Netzwerkadressen informiert;
einen dritten Schritt der Übermittlung von Netzwerkadressenanfragen für eine weitere beschränkte Anzahl Steuervorrichtungen (C17...C32), denen nacheinander Vorrichtungs-IDs zugewiesen werden können, von den verbleibenden Steuervorrichtungen (C17...C32) zusammen mit ihren jeweiligen Vorrichtungs-IDs; und
einen vierten Schritt, bei dem als Antwort auf die Netzwerkadressenanfrage im dritten Schritt die Informationsverarbeitungsvorrichtung (2) die weitere beschränkte Anzahl Steuervorrichtungen (C17...C32) des dritten Schritts anhand einer zweiten Entsprechungstabelle (403) über ihre Netzwerkadressen informiert; und
wenn nötig, Wiederholen des obigen dritten und vierten Schritts, die ausgeführt werden, bis Netzwerkadressen an alle Steuervorrichtungen ausgegeben worden sind, denen Netzwerkadressen zugewiesen werden müssen.

2. Verfahren zum Einstellen von Netzwerkadressen durch Zuweisen von Netzwerkadressen zu einer Mehrzahl Steuervorrichtungen (C1...C32) jeweils in einem System, das erhalten wird durch Verbinden der Mehrzahl Steuervorrichtungen (C1...C32) über ein Netzwerk (3) mit einer Informationsverarbeitungsvorrichtung (2), die für die Verwaltung der Mehrzahl Steuervorrichtungen (C1...C32) ausgelegt ist, umfassend:
Zuweisen einer Vorrichtungs-ID an jede Steuervorrichtung (C1...C32) mit einer Vorrichtungs-ID-Einstellvorrichtung (113), die in jeder Steuervorrichtung (C1...C32) installiert ist, und Übermitteln einer Netzwerkadressenanfrage zusammen mit der zugewiesenen Vorrichtungs-ID von jeder Steuervorrichtung (C1...C32) an die Informationsverarbeitungsvorrichtung (2); und
Informieren-lassen jeder Steuervorrichtung (C1...C32) durch die Informationsverarbeitungsvorrichtung (2) über eine Netzwerkadresse bezogen auf eine Entsprechungstabelle (403) zwischen Vorrichtungs-IDs und Netzwerkadressen zusammen mit der von jeder Steuervorrichtung (C1...C32) erhaltenen Vorrichtungs-ID;
**dadurch gekennzeichnet, dass**:
die Anzahl Vorrichtungs-IDs, die den Steuervorrichtungen (C1...C32) zugewiesen werden kann, beschränkt ist, die gleiche Vorrichtungs-ID einer Mehrzahl Steuervorrichtungen zugewiesen wird und die Informationsverarbeitungsvorrichtung (2) mit einer Mehrzahl Entsprechungstabellen (403) in geordneter Form für die gleichen Vorrichtungs-IDs ausgestattet ist, so dass nach Empfangen von Netzwerkadressenanfragen mit den gleichen Vorrichtungs-IDs die Informationsverarbeitungsvorrichtung (2) die in der Entsprechungstabelle (403) aufgeführten Steuervorrichtungen in der Reihenfolge der Entsprechungstabellen (403) je nach der Reihenfolge des Empfangs der Netzwerkadressenanfragen über ihre Netzwerkadressen informiert.

3. Verfahren zum Einstellen von Netzwerkadressen nach Anspruch 1 oder 2, wobei die Übermittlung der Netzwerkadressenanfrage von jeder Steuervorrichtung (C1...C32) an die Informationsverarbeitungsvorrichtung (2) von einem Benutzer für jede Steuervorrichtung durch einen manuellen Arbeitsschritt vorgenommen wird.

4. Verfahren zum Einstellen von Netzwerkadressen nach Anspruch 3, wobei es sich bei dem Arbeitsschritt durch den Benutzer um die Betätigung eines Knopfes handelt, der an jeder Steuervorrichtung (C1...C32) angebracht ist.

5. Verfahren zum Einstellen von Netzwerkadressen nach Anspruch 1 oder 2, wobei die Übermittlung der Netzwerkadressenanfrage von jeder Steuervorrichtung (C1...C32) an die Informationsverarbeitungsvorrichtung (2) automatisch vorgenommen wird, wird jede Steuervorrichtung unter Strom gesetzt.

6. Verfahren zum Einstellen von Netzwerkadressen nach einem vorhergehenden Anspruch, wobei eine der Steuervorrichtungen am Netzwerk (3) anstelle der Informationsverarbeitungsvorrichtung (2) verwendet wird, indem die Steuervorrichtung mit den Entsprechungstabellen (403) ausgestattet wird.

7. Verfahren zum Einstellen von Netzwerkadressen nach einem vorhergehenden Anspruch, wobei die Steuervorrichtungen aus numerischen Steuervorrichtungen, Robotersteuervorrichtungen und PLCs ausgewählt sind.

## Revendications

1. Un procédé pour établir des adresses de réseau en affectant des adresses de réseau à une pluralité de dispositifs de commande (C1...C32) respectivement dans un système obtenu en reliant ladite pluralité de dispositifs de commande (C1...C32) prévu sur un réseau (3) à un dispositif de traitement d'informations (2) adapté à gérer ladite pluralité de dispositifs de commande (C1...C32), comprenant les opérations consistant à :
affecter une ID de dispositif à chaque dispositif de commande (C1...C32) par un moyen d'établissement de ID de dispositif (113) installé dans chaque dispositif de commande (C1...C32) et émettre une requête d'adresse de réseau, en même temps que ladite ID de dispositif affectée, depuis ledit chaque dispositif de commande (C1...C32) jusqu'audit dispositif de traitement d'informations (2) ; et
amener ledit dispositif de traitement d'informations (2) à informer chaque dispositif de commande (C1...C32) d'une adresse de réseau en référence à une table de correspondance (403) entre des ID de dispositif et des adresses de réseau, en même temps que la ID de dispositif reçue à partir dudit chaque dispositif de commande (C1...C32);
**caractérisé en ce que** :
le nombre des ID de dispositif qui peuvent être affectées aux dispositifs de commande (C1...C32) est limité et ledit dispositif de traitement d'informations (2) est muni d'une pluralité desdites tables de correspondance (403) sous une forme ordonnée, le procédé comprenant :
une première étape d'émission de requêtes d'adresse de réseau pour ledit nombre limité des dispositifs de commande (C1...16) qui peuvent être des ID de dispositif affectées à un moment, à partir des dispositifs de commande (C1...C32) reliés au réseau (3), en même temps que leurs ID de dispositif respectives ;
une seconde étape dans laquelle le dispositif de traitement d'informations (2) informe ledit nombre limité de dispositifs de commande (C1...C16) de leurs adresses de réseau conformément à une première table de correspondance (403), en réponse aux requêtes d'adresse de réseau effectuées dans la première étape ;
une troisième étape d'émission de requêtes d'adresse de réseau pour un autre nombre limité de dispositifs de commande (C17...C32) peuvent être des ID de dispositif affectées à un moment, à partir des dispositifs de commande restants (C17...C32), en même temps que leurs ID de dispositif respectives ; et
une quatrième étape dans laquelle le dispositif de traitement d'informations (2) informe ledit autre nombre limité de dispositifs de commande (C17...C32) de la troisième étape, de leurs adresses de réseau conformément à une seconde table de correspondance (403) en réponse aux requêtes d'adresse de réseau effectuées dans la troisième étape ; et
si nécessaire, répétition de l'exécution des troisième et quatrième étapes ci-dessus jusqu'à ce que les adresses de réseau soient complètement informées à tous les dispositifs de commande auxquels des adresses de réseau doivent être affectées.

2. Un procédé pour établir des adresses de réseau en affectant des adresses de réseau à une pluralité de dispositifs de commande (C1...C32) respectivement dans un système obtenu en reliant ladite pluralité de dispositifs de commande (C1...C32) prévus sur un réseau (3) à un dispositif de traitement d'informations (2) adapté à gérer ladite pluralité de dispositifs de commande (C1...C32), comprenant les opérations consistant à :
affecter une ID de dispositif à chaque dispositif de commande (C1...C32) par un moyen d'établissement de ID de dispositif (113) installé dans chaque dispositif de commande (C1...C32) et émettre une requête d'adresse de réseau, en même temps que ladite ID de dispositif affectée, depuis ledit chaque dispositif de commande (C1...C32) jusqu'audit dispositif de traitement d'informations (2) ; et
amener ledit dispositif de traitement d'informations (2) à informer chaque dispositif de commande (C1...C32) d'une adresse de réseau en référence à une table de correspondance (403) entre des ID de dispositif et des adresses de réseau, en même temps que la ID de dispositif reçue depuis ledit chaque dispositif de commande (C1...C32);
**caractérisé en ce que** :
le nombre des ID de dispositif qui peuvent être affectées aux dispositifs de commande (C1...C32) est limité, la même ID de dispositif est affectée à une pluralité de dispositifs de commande, et ledit dispositif de traitement d'informations (2) est muni d'une pluralité desdites tables de correspondance (403) sous une forme ordonnée pour les mêmes ID de dispositif, de sorte que, lors de la réception de requêtes d'adresse de réseau avec les mêmes ID de dispositif, ledit dispositif de traitement d'informations (2) informe lesdits dispositifs de commande qui sont enregistrés dans lesdites tables de correspondance (403) de leurs adresses de réseau, dans un ordre desdites tables de correspondance (403) conforme à l'ordre de réception desdites requêtes d'adresse de réseau.

3. Le procédé pour établir des adresses de réseau selon la revendication 1 ou 2, dans lequel l'émission de ladite requête d'adresse de réseau depuis chaque dispositif de commande (C1...C32) jusqu'audit dispositif de traitement d'informations (2) est mise en oeuvre par une opération manuelle d'un opérateur pour ledit chaque dispositif de commande.

4. Le procédé pour établir des adresses de réseau selon la revendication 3, dans lequel ladite opération effectuée par l'opérateur est une opération d'un bouton installé sur chaque dispositif de commande (C1...C32).

5. Le procédé pour établir des adresses de réseau selon la revendication 1 ou 2, dans lequel l'émission de ladite requête d'adresse de réseau depuis chaque dispositif de commande (C1...C32) jusqu'audit dispositif de traitement d'informations (2) se produit automatiquement lorsque de l'énergie électrique est appliquée audit dispositif de commande.

6. Le procédé pour établir des adresses de réseau selon une revendication précédente quelconque, dans lequel un des dispositifs de commande prévus sur le réseau (3) est utilisé à la place dudit dispositif de traitement d'informations (2) en prévoyant que le dispositif de commande soit muni desdites tables de correspondance (403).

7. Le procédé pour établir des adresses de réseau selon une revendication précédente quelconque, dans lequel lesdits dispositifs de commande sont l'un quelconque parmi des dispositifs de commande numériques, des dispositifs de commande de robot et des unités logiques de commande programmable.
